# FASCICULE DE BREVET EUROPEEN

(11) **EP 0 988 495 B1**
(45) Date de publication et mention de la délivrance du brevet: **23.04.2003**
(21) Numéro de dépôt: 98925781.1
(22) Date de dépôt: 26.05.1998
(51) Int. Cl.: F25D 3/10, A23L 3/375, A23B 4/09

(54) **PROCEDE ET INSTALLATION DE REFROIDISSEMENT DU CONTENU D'UNE ENCEINTE**
VERFAHREN UND VORRICHTUNG ZUM KÜHLEN EINES GEFÄSSINHALTS
METHOD AND INSTALLATION FOR COOLING THE CONTENTS OF A CHAMBER

(30) Priorité: 10.06.1997 FR 9707165
(43) Date de publication de la demande: 29.03.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: CLOAREC, Alain Résidence du Moulin Saint-Martin, F-91160 Longjumeau (FR); GAFFET, Luc, Saint-Mathurin F-56270 Ploemeur (FR)
(74) Mandataire: Mellul-Bendelac, Sylvie Lisette
(86) Numéro de dépôt international: FR9801044
(87) Numéro de publication internationale: WO98057106

(56) Documents cités:
- EP-A- 0 355 519
- EP-A- 0 711 511
- EP-A- 0 744 578
- FR-A- 2 485 950
- GB-A- 1 430 385
- US-A- 4 094 164
- US-A- 5 595 865
- US-A- 5 603 567

## Description

La présente invention concerne le domaine des procédés de refroidissement du contenu d'une enceinte à l'aide d'un liquide cryogénique.

Elle concerne, en particulier, le refroidissement de produits alimentaires dans des appareils du type mélangeurs, malaxeurs ou pétrins, le contenu de l'appareil pouvant être alors solide ou pâteux comme c'est le cas de la viande ou encore liquide.

En considérant l'exemple des mélangeurs de viande, on sait qu'il existe une littérature très abondante concernant l'utilisation de CO₂ liquide, en particulier, en injection dans la partie basse du mélangeur afin d'améliorer les conditions d'échange thermique entre le liquide cryogénique et la viande. On se reportera, par exemple, aux documents U.S.-4,476,686 et EP-744,578. Il est aussi connu d'utiliser le CO₂ liquide pour refroidir de l'eau (voir par exemple US-A-4094164).

Cette utilisation du CO₂ liquide dans les mélangeurs de viande a fait l'objet depuis, de très nombreuses applications industrielles dans le monde entier, ayant permis, avec le recul, de démontrer clairement l'existence d'un certain nombre d'inconvénients liés à l'utilisation du CO₂, parmi lesquels on peut citer notamment un inconvénient d'ordre technique et un inconvévient d'ordre économique :
- dans le domaine de la technique, des difficultés ont été constatées pour certains produits subissant, après refroidissement, une opération ultérieure de cuisson en friteuse, produits pour lesquels un effet qualifié par les utilisateurs d'effet "pop-corn" a été constaté, où l'on observe un éclatement ou pulvérisation de la viande durant la friture.

Sans être parfaitement élucidé, ce phénomène a été au moins partiellement expliqué comme résultant de la dissolution du CO₂ gazeux dans la masse de viande.
- Sur le plan économique, il faut signaler que les sites de traitement de produits alimentaires mettent traditionnellement en oeuvre plusieurs fluides, parmi lesquels on trouve le plus couramment de l'azote sous une ou plusieurs formes parmi lesquelles du liquide.

On comprend alors tout l'intérêt qu'il y aurait à pouvoir remplacer le CO₂ liquide (source d'effet « pop-corn » on l'a vu) et utiliser une seule source de liquide cryogénique pour les différentes opérations réalisées sur le site, par exemple l'azote liquide, ce qui nécessite donc la possibilité d'utiliser l'azote liquide, en remplacement du traditionnel CO₂ liquide, dans de telles opérations de refroidissement du contenu de mélangeurs, malaxeurs et autres pétrins.

Il faut néanmoins signaler que l'azote liquide, de par ses propriétés très particulières (notamment liées à sa très basse température), pose des difficultés techniques dans une telle opération de refroidissement, tant pour ce qui est d'obtenir un bon rendement énergétique et un bon transfert de la chaleur sensible du gaz, que d'assurer une bonne dispersion du liquide cryogénique dans la masse de produit, ou bien encore que pour ce qui est d'éviter les conséquences négatives d'un refroidissement brutal de l'environnement et du produit traité (risque de liquéfaction de l'oxygène de l'air, de surgélation intempestive du produit, ou encore collage du produit à refroidir sur les parois du mélangeur ou encore sur les pièces d'injection du fluide cryogénique).

Les documents GB-1,430,385 et EP-A-166655 avaient déjà évoqué l'intérêt, dans des opérations de refroidissement de liquides alimentaires, ou encore de poudres détergentes, d'injecter l'azote liquide dans la partie basse de l'enceinte contenant le produit à refroidir.

Le document EP-A-711,511 a également récemment évoqué les problèmes liés à l'utilisation d'azote liquide dans le bas de mélangeurs de produits alimentaires, et proposait, à titre de solution, d'une part, la séparation du liquide cryogénique de sa phase gazeuse afin d'injecter dans le bas du mélangeur un liquide substantiellement franc, et d'autre part, l'utilisation avantageuse d'injecteurs se présentant sous la forme de fentes rectangulaires.

On notera, par ailleurs, que ce document résout le problème de collage éventuel du produit sur les injecteurs et autres canalisations à l'intérieur du mélangeur en les faisant balayer par la phase gazeuse précédemment séparée du liquide cryogénique.

Les travaux menés à bien par la Demanderesse sur ce sujet ont montré qu'il est possible de résoudre les problèmes techniques précédemment évoqués, et notamment d'obtenir d'excellents résultats, tant sur l'homogénéité de la température atteinte dans la masse de produit que sur la suppression de l'effet "pop-corn", à condition d'injecter le liquide cryogénique dans l'enceinte à une pression significative, d'au moins 5 bars, et se situant préférentiellement dans l'intervalle allant de 5 à 15 bars.

En revenant sur le cas de l'azote liquide, ces travaux ont donc permis de démontrer qu'il est avantageux ici d'utiliser, non pas les traditionnels stockages d'azote liquide basse pression (pression se situant typiquement au voisinage de 1,5 à 2 bars, voire jusqu'à 3 bars) mais au contraire d'utiliser des stockages d'azote liquide moyenne pression permettant précisément de délivrer de l'azote liquide à une pression supérieure ou égale à 5 bars.

On peut noter immédiatement qu'une telle utilisation d'azote liquide (ou autre liquide cryogénique) à haute pression peut apparaître extrêmement paradoxale du point de vue thermique (voire repoussante) pour l'homme du métier cryogéniste, dans de telles applications de refroidissement (réfrigération) de produits alimentaires.

En effet, il faut considérer que la température de l'azote liquide dans ses conditions traditionnelles d'utilisation (pression se situant typiquement au voisinage de 1,5 à 2 bars) est voisine de - 190 °C, alors qu'au voisinage de 10 bars (point milieu de la gamme de pression envisagée ici), sa température va se stabiliser au voisinage de -180°C, d'où une perte thermique (frigories) significative.

Il a pourtant été permis de démontrer ainsi un gain sur les temps de cycle de refroidissement de masses de viande, en passant du CO₂ liquide à l'azote liquide sous pression (entre 5 et 15 bars), permettant de diviser les temps de cycle par deux.

Le procédé de refroidissement d'une masse de produit alimentaire contenue dans une enceinte (par exemple un appareil du type pétrin ou mélangeur ou malaxeur), selon l'invention, selon lequel on injecte le liquide cryogénique autre que le CO₂ au sein de la masse de produit, dans la partie basse de l'enceinte, se caractérise en ce que la pression du liquide injecté est supérieure ou égale à 5 bars, et se situant préférentiellement entre 5 et 15 bars.

Même si l'invention s'applique très largement à toute substance cryogénique utilisée dans son sens le plus large sous forme liquide à partir d'un stockage diphasique liquide/vapeur, incluant donc l'azote liquide, l'argon liquide ou encore l'oxygène liquide, elle trouve une application toute particulière et avantageuse dans la mise en oeuvre d'azote liquide.

On l'aura compris à la lecture de ce qui précède, les « liquides cryogéniques» visés par la présente invention excluent le CO₂ pour les raisons techniques et économiques déjà largement développées.

Selon une forme avantageuse de mise en oeuvre de l'invention, le liquide cryogénique est injecté dans l'appareil au moyen d'au moins une buse d'injection, comportant un corps de forme cylindrique, entouré sur toute ou partie de sa longueur par un tube concentrique, définissant entre le corps et le tube un espace annulaire isolant.

Si l'on pourra utiliser un espace annulaire rempli d'air, on préférera néanmoins utiliser un espace annulaire rempli d'un matière faiblement conductrice comme un polymère, tel que le Téflon ou encore un polyamide, ou bien de façon avantageuse, un polyéthylène, par exemple du type HD1000.

Selon un des modes avantageux de mise en oeuvre de l'invention, la ou les buse(s) d'injection sont alimentées en liquide cryogénique par au moins une rampe d'alimentation (distribution), elle-même reliée en amont à une source du liquide cryogénique utilisé, la rampe étant préférentiellement située en position haute par rapport à la ou les buse(s) d'injection.

On comprendra à la lecture de ce qui précède que le procédé selon l'invention pourra être utilisé sur des appareils de type et de géométrie très variés, utilisés dans l'industrie pour faire du refroidissement de produits, que le produit y soit agité ou non, par exemple sur des mélangeurs à une seule auge, pour lesquels on pourra alors disposer une seule buse ou séries de buses sur l'un des cotés du mélangeur ou encore une buse ou séries de buses de chaque coté du mélangeur. On peut également envisager l'utilisation d'un appareil à deux auges (comme ceux qui seront illustrés plus loin dans le cadre des figures de la présente demande), pour lesquelles il sera avantageux de mettre en oeuvre au niveau de chaque auge une buse ou série de buses d'injection.

Comme signalé précédemment, la présente invention repose sur l'utilisation d'un liquide cryogénique à une pression significative puisque devant être supérieure ou égale à 5 bars et se situant préférentiellement dans l'intervalle allant de 5 à 15 bars. Pour cela, une des solutions simples est d'utiliser directement en amont un stockage de liquide à moyenne pression permettant de délivrer ce liquide dans la gamme requise.

Néanmoins, pour tenir compte par exemple des contraintes qui peuvent être locales et liées au site utilisateur considéré (par exemple parce que le site est déjà détenteur d'un stockage basse pression), il peut être nécessaire de fonctionner à partir d'un stockage initial de liquide qui n'est pas un stockage moyenne pression mais qui est un stockage traditionnel à basse pression (pression voisine de 1,5 à 2 bars, voire atteignant, bien que plus rarement, 3 bars). Dans un tel cas, selon une des mises en oeuvre possibles de l'invention, en partant de ce stockage initial basse pression, on transfère le liquide cryogénique dans une capacité intermédiaire, que l'on pressurise à l'aide d'une arrivée de gaz (par exemple d'azote gazeux dans le cas d'un stockage d'azote liquide), afin de pouvoir en retirer du liquide à pression plus élevée (typiquement dans la gamme requise de 5 à 15 bars), pour pouvoir injecter ce liquide pressurisé comme requis selon l'invention dans la partie basse de l'enceinte.

Cette solution, par le fait qu'elle met en oeuvre un liquide sous-refroidi, est cependant relativement avantageuse énergétiquement (malgré la faible pression de la source de liquide cryogénique utilisée).

Le procédé selon l'invention peut en outre comporter une ou plusieurs des caractéristiques suivantes :
- la capacité (réserve) de la source initiale de liquide cryogénique utilisée, et la consommation horaire de liquide cryogénique mise en oeuvre dans l'enceinte pour obtenir le refroidissement recherché, sont telles, qu'il est nécessaire d'effectuer un renouvellement (rechargement) de la source à intervalles permettant que le liquide cryogénique stocké soit toujours en état sous-refroidi ;
- on met en oeuvre, sur la ligne entre la source de liquide cryogénique et l'enceinte, un moyen permettant de limiter l'injection de diphasique dans l'enceinte, tel qu'un purgeur, un séparateur de phase, ou un sous-refroidisseur ;
- la ligne entre la source de liquide cryogénique et l'enceinte est dépourvue de moyens permettant de limiter l'injection de diphasique dans l'enceinte, tel qu'un purgeur, un séparateur de phase, ou un sous-refroidisseur ;
- on procède, avant ou après l'opération de refroidissement à l'aide d'un liquide cryogénique selon l'invention, à une opération de balayage de tout ou partie de la ligne entre la source de liquide cryogénique et l'enceinte, à l'aide d'un gaz de balayage, par exemple un gaz neutre tel l'azote ;
- on procède, durant l'opération de refroidissement à l'aide d'un liquide cryogénique selon l'invention, à une ou plusieurs pauses, permettant de réaliser une ou plusieurs opérations de balayage de tout ou partie de la ligne entre la source de liquide cryogénique et l'enceinte, à l'aide d'un gaz de balayage, par exemple un gaz neutre tel l'azote (on procède alors dans un tel cas à une ou plusieurs séquences « refroidissement à l'aide du liquide cryogénique/balayage à l'aide d'un gaz ») ;

D'autres avantages de la présente invention apparaîtront plus clairement dans la description suivante, donnée à titre illustratif mais nullement limitatif, faite en relation avec les dessins annexés pour lesquels :
- la figure 1 est une représentation schématique d'un mélangeur (par exemple de viande) à deux auges, mettant en oeuvre, de chaque coté du mélangeur, une série de buses d'injection d'azote liquide dans la partie basse du mélangeur selon l'invention ;
- la figure 2 est une vue de détail de la rampe d'injection présente sur chaque côté du mélangeur de la figure 1 ;
- la figure 3 est une vue schématique de dessus du mélangeur de la figure 1;
- la figure 4 est une représentation schématique globale d'une installation convenant pour la mise en oeuvre de l'invention ;
- la figure 5 est une vue détaillée en coupe longitudinale d'une buse d'injection du liquide cryogénique selon l'invention ;
- la figure 6 est une vue détaillée en coupe longitudinale d'un autre mode de réalisation d'une buse d'injection du liquide cryogénique selon l'invention.

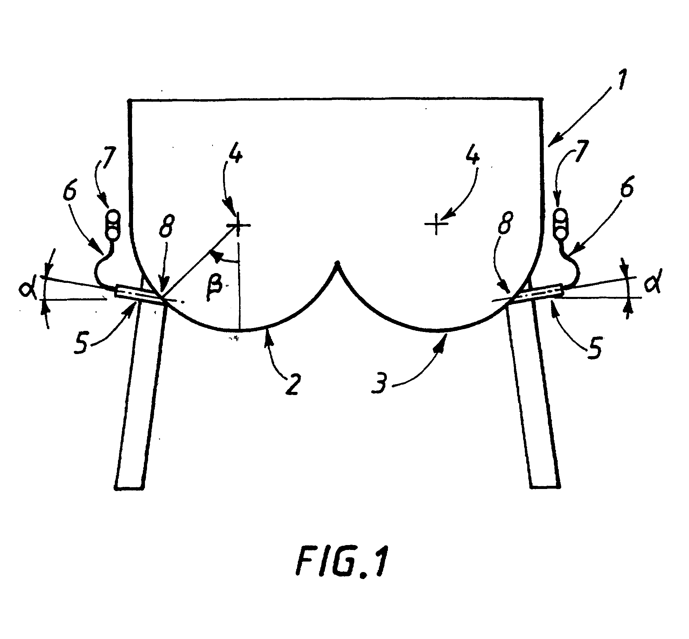

On reconnaît sur la figure 1 la partie inférieure d'un mélangeur (par exemple un mélangeur de viande) à deux auges 2 et 3, pour lequel on met en oeuvre une série de buses d'injection d'azote liquide de chaque côté de l'appareil.

On a symbolisé par la référence 5 sur la figure, les buses d'injection du liquide cryogénique, se raccordant à la paroi du mélangeur, buses elles-mêmes alimentées au travers de flexibles 6 par une rampe de distribution et d'alimentation 7, avantageusement positionnée comme c'est le cas sur cette figure 1 en position haute par rapport aux buses d'injection.

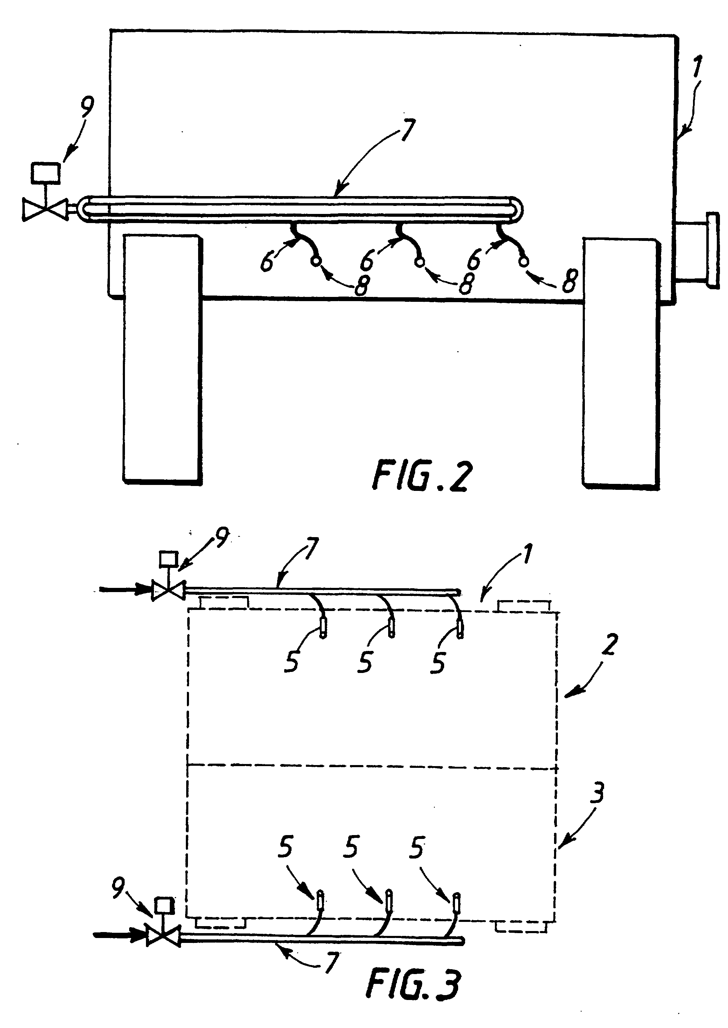

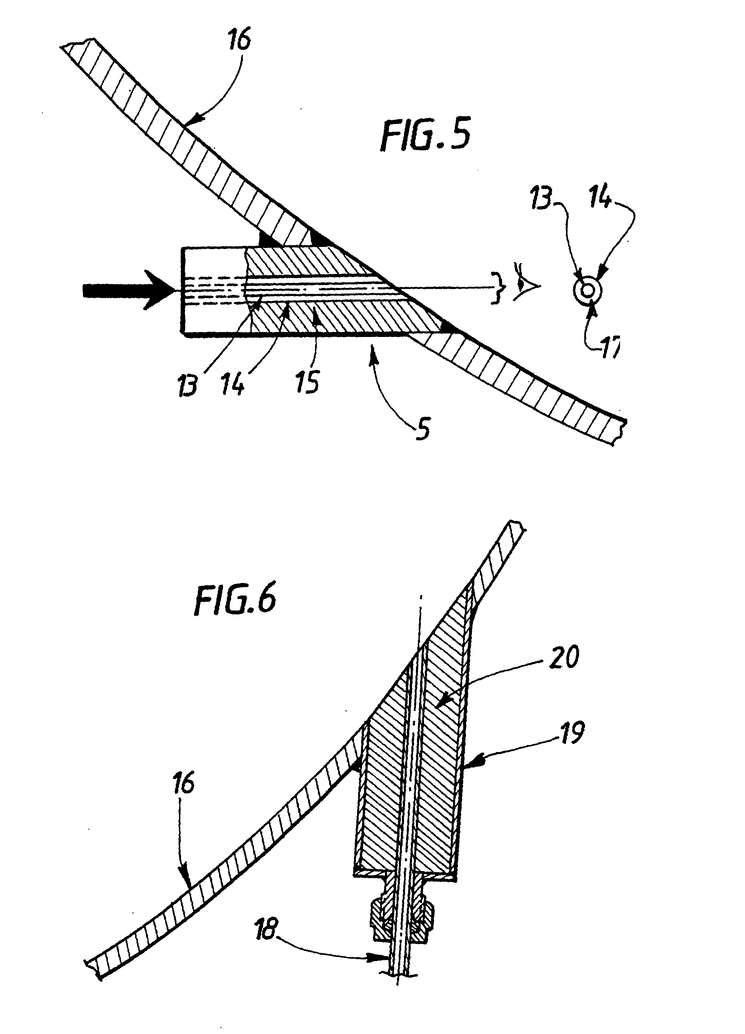

La structure des rampes 7 sera détaillée ci-dessous dans le cadre de la figure 2, tandis que la structure des buses d'injection 5 sera détaillée ci-dessous dans le cadre de la figure 5 et de la figure 6.

Afin de ne pas charger inutilement la figure, on a représenté, au niveau de la référence 4, par de simples croix, les axes des arbres des rotors du mélangeur, un axe par auge du mélangeur comme représenté sur la figure 1.

Comme on pourra le constater à la lecture de cette figure 1, la position des buses d'injection le long de la paroi de chaque auge (angle bêta), ainsi que l'inclinaison de chaque buse d'injection par rapport à l'horizontale (angle alpha), adoptent ici des valeurs avantageuses, en vue d'une part, d'éviter que la trajectoire du jet de liquide cryogénique ne croise les arbres et rotors du mélangeur (éviter les risques de création de points froids), ceci tout en intéressant une portion maximum de la masse de produit à refroidir contenue dans le mélangeur, mais également d'autre part d'éviter, par l'inclinaison de la buse d'injection par rapport à l'horizontale, que lors du nettoyage ultérieur du mélangeur à l'eau, cette eau ne puisse remonter dans la ligne d'alimentation en liquide cryogénique.

On a ainsi pu considérer qu'un angle bêta voisin de 45° par rapport à la verticale donne de très bons résultats, et qu'un angle alpha d'au moins 10° par rapport à l'horizontale est un réglage qu'il est avantageux d'adopter.

On retrouve au niveau de la figure 2, une vue de côté du mélangeur 1, permettant de visualiser dans de meilleures conditions une des rampes de distribution 7 permettant d'alimenter en azote liquide, via des flexibles 6, les différents points d'injection 8 au niveau de la paroi du mélangeur.

Pour des raisons de simplicité de lecture, on n'a pas ici représenté le détail des buses d'injection 5 se raccordant aux points 8.

Comme il apparaîtra clairement à l'homme du métier, on a illustré ici (figures 2 et 3) une situation où trois points d'injection sont ménagés de chaque côté du mélangeur, mais bien entendu le hombre des points d'injection, ainsi que leur position sur la paroi (angles α et β) doivent être, dans chaque cas, déterminés en fonction de la taille du mélangeur, de la masse de produit à traiter ou encore du delta de température à atteindre en fin du traitement.

Comme on pourra le constater à la lecture de cette figure 2, la rampe d'alimentation 7 n'est pas ici constituée d'une simple canalisation rectiligne sur laquelle viendraient se brancher les flexibles 6, mais adopte une structure un peu plus élaborée et avantageuse, pour permettre que le flux d'azote liquide se répartisse aussi uniformément que possible sur tous les flexibles, en évitant en particulier que l'un ou l'autre des flexibles reçoivent une quantité très faible de fluide par rapport à ce que reçoivent les autres flexibles : les rampes adoptent ici une structure de circuit, fermé de façon circulaire à ses deux extrémités, alimentée au niveau d'une de ses extrémités au travers d'une électrovanne 9, les flexibles 6 étant raccordés à la portion rectiligne inférieure de la rampe.

La figure 3 permet, quant à elle, de mieux visualiser en vue de dessus les deux rampes 7 d'alimentation, positionnées chacune de part et d'autre du mélangeur, alimentant chacune trois points d'injection via trois buses d'injection 5.

L'utilisation d'une électrovanne 9, à titre de vanne de réglage du débit alimentant chaque rampe, est tout particulièrement avantageuse pour pouvoir effectuer une alimentation séquencée de la rampe, ce qui conduit à être mieux à même d'éviter la formation de points froids sur la paroi du mélangeur.

Par ailleurs, si le mode de réalisation représenté ici comporte une électrovanne par rampe (donc une électrovanne pour trois injecteurs), on conçoit qu'il est également possible, sans sortir du cadre de la présente invention, de positionner une électrovanne par point d'injection, juste en amont de l'injecteur.

Cette configuration à électrovanne(s) décentralisée(s) peut se révéler avantageuse dans certains cas, par exemple pour éviter les remontées d'humidité en provenance de l'appareil ou enceinte trop haut vers l'amont de la ligne. Cette solution « multiples électrovannes » se révèle certes plus coûteuse mais peut permettre un fonctionnement dégradé utilisant moins d'injecteurs en service au cas ou l'une au l'autre des électrovannes n'est pas opérationnelle suite à un problème technique.

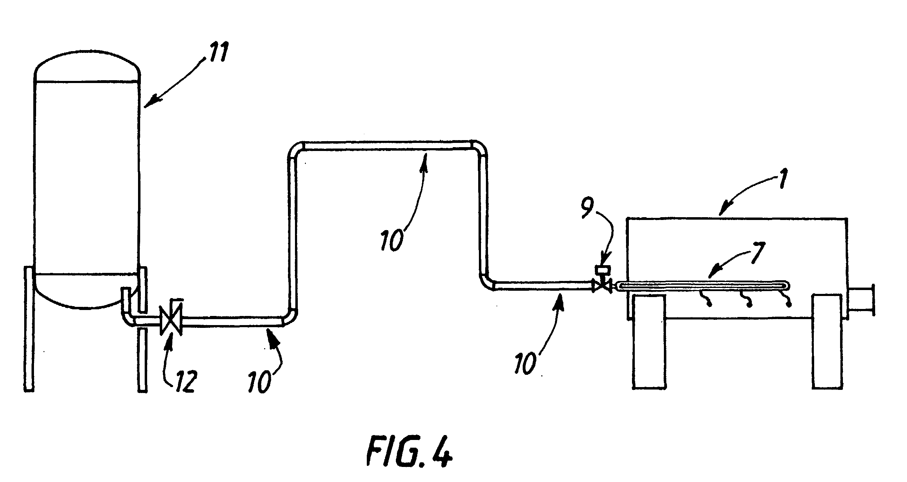

La figure 4 fournit, quant à elle, une vue plus globale d'une installation convenant pour la mise en oeuvre de l'invention, où l'on reconnaît la présence d'un stockage d'azote liquide 11 moyenne pression (se situant par exemple dans la gamme de pression avantageuse allant de 5 à 15 bars), auquel est connectée, au travers d'une vanne d'arrêt 12, une ligne de transfert 10, permettant d'amener l'azote liquide à l'une ou plusieurs rampes d'alimentation du mélangeur 1.

La ligne du transfert 10 est une ligne isolée apte à transférer un liquide cryogénique telle que connue en soi de l'homme du métier des gaz.

On n'a pas représenté sur la ligne, pour des raisons de simplicité, de moyen permettant de limiter l'injection de diphasique dans l'enceinte, moyen qui peut être avantageux dans certaines circonstances (selon la configuration locale mais également selon le produit à refroidir). Mais on conçoit que ces moyens sont bien connus de l'homme du métier des gaz, en particulier de l'homme du métier des lignes cryogéniques, tels qu'incluant notamment des purgeurs, ou des séparateurs de phase, ou encore des sous-refroidisseurs (bains d'azote liquide dans lequel on fait transiter la canalisation de liquide cryogénique afin de sous-refroidir le liquide cryogénique et compenser ainsi les entrées de chaleur).

Reste, et c'est un des avantages significatifs de la présente invention par rapport aux caractéristiques du procédé rapporté dans le document EP-744,578 déjà cité, que l'utilisation selon la présente invention de moyens sur la ligne permettant de limiter l'injection de diphasique dans l'enceinte est dans l'immense majorité des cas non nécessaire.

En effet, les conditions de pression (et de débit généralement nécessaires pour un site utilisateur donné) pratiquées permettent de mettre en froid la ligne beaucoup plus rapidement qu'habituellement : à basse pression la mise en froid d'une ligne peut prendre couramment 1/2 heure alors qu'ici à haute pression, on obtient tout au plus en deux minutes une mise en froid de la ligne et un liquide substantiellement franc en bout de ligne à l'entrée de l'enceinte.

La figure 5 permet de visualiser un exemple de buse d'injection 5 selon l'invention, raccordée à la paroi 16 du mélangeur 1, et se présentant donc sous la forme d'un corps cylindrique 13, entourée sur toute ou partie de sa longueur par un tube concentrique 14, permettant ainsi de définir entre le corps et le tube, un espace annulaire isolant 17 avantageusement rempli d'une matière polymère.

On a volontaire centré cette figure sur la buse proprement dite, on n'a donc par représenté la façon dont on l'alimente en liquide cryogénique, par exemple via un flexible.

L'injecteur 13 est par ailleurs entouré d'un manchon isolant extérieur 15, par exemple métallique.

La figure 6 permet de visualiser un autre exemple de buse d'injection selon l'invention, raccordée à la paroi 16 du mélangeur, et se présentant sous la forme d'un tube cylindrique métallique 18 d'injection, entouré sur une partie de sa longueur par un tube concentrique métallique 19, définissant entre les deux tubes un espace annulaire isolant 20 rempli pour le mode de réalisation représenté d'un polyéthylène du type HD1000.

Une installation telle que celle illustrée dans le cadre des figures 1 à 3 a été utilisée pour la mise en oeuvre du procédé selon l'invention dans le but de refroidir des masses de viande hachée à l'aide d'azote liquide, en remplacement du CO₂ liquide traditionnellement utilisé auparavant, en injection dans la partie basse d'un appareil de type mélangeur.

La matière première utilisée était de la viande de boeuf hachée (haché relativement grossier) à 15 % de matière grasse, dont il fallait réaliser le refroidissement dans le mélangeur, avant des opérations ultérieures de formage et surgélation.

La viande arrivait dans le mélangeur à une température initiale voisine de 3°C puisque provenant d'une chambre froide.

La capacité du mélangeur était voisine de la tonne de viande.

Comme signalé précédemment en référence aux figures 1 à 3, on a donc mis en oeuvre une série de 6 buses d'injection d'azote liquide dans la partie basse du mélangeur, 3 buses pour chaque auge du mélangeur.

La pression du liquide cryogénique injectée était voisine de 10 bars.

On a ainsi pu tester des masses de viande allant d'environ 600 kg à la tonne, en s'attachant dans chaque cas à mesurer la température initiale de la viande entrante (voisine de 3°C), sa température finale, la consommation d'azote liquide pour réaliser l'opération (exprimée ci-dessous en litre/kg de viande), ainsi que la température des gaz froids d'extraction (récupérés dans la partie haute du mélangeur).

Les résultats observés peuvent être résumés de la façon suivante :
- une température finale de la viande voisine de -1,2 °C, pour une consommation d'azote liquide faible puisque se situant en moyenne aux environ de 0,2 à 0,5 litre par kilo de viande traitée (la consommation en dioxyde de carbone dans ces mêmes cas serait voisine de 0,35 kg par kg de viande);
- une température de sortie très homogène sur toute la masse de viande traitée;
- les opérateurs habituels de l'installation sont non seulement satisfaits de la qualité des produits ainsi traités mais n'observent pas de différence notable en comparaison d'un traitement effectué habituellement au CO₂;
- la température de sortie des gaz, qui est voisine de -50°C prouve que la majeure partie de la chaleur spécifique du gaz à été transférée (bonnes performances en terme de transfert thermique) ;
- on n'observe aucun colmatage des injecteurs;
- le phénomène « pop-corn » observé durant une éventuelle opération ultérieure de friture est largement diminué voire carrément supprimé ;
- on observe, par rapport à un refroidissement sous CO₂ liquide, un gain de temps de cycle permettant, selon les conditions choisies , de diviser le temps de cycle par deux;
- compte tenu du nombre de mélangeurs du site (2), de la consommation du site (20000 litres/jour d'azote liquide pour les deux mélangeurs) et de la capacité du stockage d'azote utilisé (50000 litres), le stockage devait être réapprovisionné chaque jour ou chaque journée et demi, le liquide cryogénique qui y est stocké est donc toujours en situation de sous-refroidissement.

## Revendications

1. Procédé de refroidissement d'une masse de produit alimentaire contenue dans une enceinte, à l'aide d'un liquide cryogénique autre que le CO₂, selon lequel on injecte le liquide cryogénique au sein de la masse de matière, dans la partie basse de l'enceinte, **caractérisé en ce que** la pression du liquide injecté est supérieure ou égale à 5 bars, et préférentiellement comprise entre 5 et 15 bars.

2. Procédé selon la revendication 1, **caractérisé en ce que** le liquide cryogénique est injecté dans l'appareil à l'aide d'au moins une buse d'injection de forme cylindrique, entourée sur toute ou partie de sa longueur par un tube concentrique, définissant entre la buse et le tube, un espace annulaire isolant.

3. Procédé selon la revendication 1 ou 2, **caractérisé en ce que** la ou les buse(s) d'injection sont alimentées en liquide cryogénique par au moins une rampe de distribution située en position haute par rapport à la ou les buses.

4. Procédé selon l'une des revendications 1 à 3, **caractérisé en ce que** l'enceinte est du type pétrin, mélangeur ou malaxeur, à une seule auge, et **en ce que** l'on injecte le liquide cryogénique dans l'enceinte au travers dune buse d'injection ou série de buses d'injection présentes de chaque côté de l'auge.

5. Procédé selon l'une des revendications 1 à 3, **caractérisé en ce que** l'enceinte est du type pétrin ou mélangeur ou malaxeur à deux auges, et **en ce que** l'on injecte le liquide cryogénique dans l'enceinte au niveau dune buse d'injection ou série de buses d'injection présente de chaque coté de l'enceinte.

6. Procédé selon l'une des revendications 1 à 5, **caractérisé en ce que** l'on utilise, à titre de liquide cryogénique, de l'azote liquide en provenance d'une source moyenne pression, de pression comprise dans l'intervalle allant de 5 à 15 bars.

7. Procédé selon l'une des revendications 1 à 5, **caractérisé en ce que** l'on utilise, à titre de liquide cryogénique, de l'azote liquide en provenance d'une source basse pression, dont la pression se situe dans l'intervalle allant de 1 à 3 bars, et **en ce que** l'on achemine cet azote liquide à l'appareil de la façon suivante :
- on dirige le liquide cryogénique issu du stockage basse pression dans une capacité tampon intermédiaire ;
- on pressurise la capacité à l'aide d'azote gazeux ;
- on extrait de la capacité tampon intermédiaire du liquide cryogénique ainsi pressurisé pour le diriger vers la ou lesdites buse(s) d'injection.

8. Procédé selon l'une des revendications précédentes, **caractérisé en ce que** l'on injecte le liquide cryogénique dans l'enceinte de façon séquencée.

9. Installation de refroidissement d'une masse de produit alimentaire contenue dans une enceinte, à l'aide d'un liquide cryogénigue autre que le CO₂, comportant :
- un stockage moyenne pression du liquide cryogénique, dont la pression est supérieure ou égale à 5 bars et se situant préférentiellement dans l'intervalle allant de 5 à 15 bars ;
- au moins une buse d'injection, apte à injecter le liquide au sein de la masse de matière contenue dans l'enceinte, au travers de la paroi de la partie basse de l'enceinte;
- une ligne de transfert apte à alimenter ladite au moins une buse d'injection à partir du liquide cryogénique stocké dans ledit stockage moyenne pression.

10. Installation selon la revendication 9, **caractérisée en ce que** ladite ligne de transfert alimente 1a ou les buse(s) d'injection au travers d'au moins une rampe de distribution disposée en position haute par rapport à la ou chaque buse d'injection.

11. Installation selon la revendication 9 ou 10, **caractérisée en ce que** la ou chaque buse d'injection est formée d'un corps de forme cylindrique entouré sur toute ou partie de sa longueur par un tube concentrique définissant entre la buse et le tube un espace annulaire isolant.

12. Installation de refroidissement dune masse de produit alimentaire contenue dans une enceinte, à l'aide d'un liquide cryogénique autre que le CO₂, comprenant :
- un stockage basse pression du liquide cryogénique, dont la pression se situe dans l'intervalle allant de 1 à 3 bars ;
- au moins une buse d'injection apte à injecter le liquide au sein de la masse de matière contenue dans l'enceinte, au travers de la paroi de la partie basse de l'enceinte;
- une capacité tampon de stockage intermédiaire du liquide cryogénique;
- une première ligne de transfert apte à diriger du liquide issu dudit stockage basse pression dans la capacité tampon intermédiaire ;
- des moyens de pressurisation du liquide stocké dans la capacité tampon intermédiaire, apte à pressuriser ce liquide jusqu'à une pression se situant à une valeur supérieure ou égale à 5 bars, et préférentiellement dans l'intervalle allant de 5 à 15 bars;
- une seconde ligne de transfert apte à diriger du liquide ainsi pressurisé en provenance de la capacité tampon intermédiaire vers ladite enceinte, pour alimenter en liquide cryogénique la ou lesdites buse(s) d'injection.

13. Installation selon 1a revendication 12, **caractérisée en ce que** la ou lesdites buse(s) d'injection sont alimentées au travers d'au moins une rampe de distribution, connectée à ladite seconde ligne de transfert, la ou chaque rampe de distribution étant disposée en position haute par rapport à la ou les buse(s) d'injection.

## Patentansprüche

1. Verfahren zum Kühlen einer in einem Gefäß enthaltenen Nahrungsmittelmasse mittels einer von CO₂ verschiedenen Tiefsttemperaturflüssigkeit, bei dem die Tiefsttemperaturflüssigkeit im Bodenteil des Gefäßes ins Innere der Materialmasse injiziert wird, **dadurch gekennzeichnet, dass** der Druck der injizierten Flüssigkeit größer oder gleich 5 Bar ist und vorzugsweise zwischen 5 und 15 Bar liegt.

2. Verfahren nach Anspruch 1, **dadurch gekennzeichnet, dass** die Tiefsttemperaturflüssigkeit in die Vorrichtung mittels zumindest einer Injektionsdüse von zylindrischer Form injiziert wird, die auf ihrer ganzen Länge oder einem Teil ihrer Länge von einem konzentrischen Rohr umgeben ist, das zwischen der Düse und dem Rohr einen isolierenden, ringförmigen Raum definiert.

3. Verfahren nach Anspruch 1 oder 2, **dadurch gekennzeichnet, dass** die Injektionsdüse oder die Injektionsdüsen durch zumindest eine Verteilerleitung mit Tiefsttemperaturflüssigkeit versorgt werden, die sich in einer relativ zu der oder den Düsen oberen Position befindet.

4. Verfahren nach einem der Ansprüche 1 bis 3, **dadurch gekennzeichnet, dass** das Gefäß von der Art einer Misch- oder Knetmaschine mit einem einzigen Trog ist und dass die Tiefsttemperaturflüssigkeit in das Gefäß durch eine Injektionsdüse oder eine Reihe von Injektionsdüsen injiziert wird, die auf jeder Seite des Trogs vorhanden sind.

5. Verfahren nach einem der Ansprüche 1 bis 3, **dadurch gekennzeichnet, dass** das Gefäß von der Art einer Mischoder Knetbackmaschine mit zwei Trögen ist und dass die Tiefsttemperaturflüssigkeit in das Gefäß auf Höhe einer Injektionsdüse oder einer Reihe von Injektionsdüsen injiziert wird, die auf jeder Seite des Trogs vorhanden ist.

6. Verfahren nach einem der Ansprüche 1 bis 5, **dadurch gekennzeichnet, dass** als Tiefsttemperaturflüssigkeit flüssiger Stickstoff verwendet wird, der von einer Mitteldruckquelle mit einem im Intervall von 5 bis 15 Bar liegenden Druck kommt.

7. Verfahren nach einem der Ansprüche 1 bis 5, **dadurch gekennzeichnet, dass** als Tiefsttemperaturflüssigkeit flüssiger Stickstoff verwendet wird, der von einer Niederdruckquelle kommt, deren Druck im Intervall von 1 bis 3 Bar liegt, und dass dieser flüssige Stickstoff auf folgende Weise der Vorrichtung zugeführt wird:
- die von dem Niederdruckspeicher kommende Tiefsttemperaturflüssigkeit wird in ein Zwischenspeichervolumen geleitet,
- das Volumen wird mittels gasförmigem Stickstoff unter Druck gesetzt,
- aus dem Zwischenspeichervolumen wird so unter Druck gesetzte Tiefsttemperaturflüssigkeit entnommen, um sie zu der oder den Injektionsdüsen zu leiten.

8. Verfahren nach einem der vorhergehenden Ansprüche, **dadurch gekennzeichnet, dass** die Tiefsttemperaturflüssigkeit auf sequentielle Weise in das Gefäß injiziert wird.

9. Einrichtung zum Kühlen einer in einem Gefäß enthaltenen Nahrungsmittelmasse mittels einer von CO₂ verschiedenen Tiefsttemperaturflüssigkeit mit:
- einem Mitteldruckspeicher für die Tiefsttemperaturflüssigkeit, deren Druck größer oder gleich 5 Bar ist und vorzugsweise im Intervall von 5 bis 15 Bar liegt,
- zumindest einer Injektionsdüse, die in der Lage ist, die Flüssigkeit durch die Wand des Bodenteils des Gefäßes ins Innere der im Gefäß enthaltenen Materialmasse zu injizieren,
- einer Übertragungsleitung, die in der Lage ist, die zumindest eine Injektionsdüse mit in dem Mitteldruckspeicher gespeicherter Tiefsttemperaturflüssigkeit zu versorgen.

10. Einrichtung nach Anspruch 9, **dadurch gekennzeichnet, dass** die Übertragungsleitung die Injektionsdüse oder die Injektionsdüsen über zumindest eine Verteilerleitung versorgt, die in einer relativ zu der oder jeder Injektionsdüse oberen Position angeordnet ist.

11. Einrichtung nach Anspruch 9 oder 10, **dadurch gekennzeichnet, dass** die Injektionsdüse oder jede Injektionsdüse aus einem Körper von zylindrischer Form besteht, der auf seiner ganzen Länge oder einem Teil seiner Länge von einem konzentrischen Rohr umgeben ist, das zwischen der Düse und dem Rohr einen isolierenden ringförmigen Raum definiert.

12. Einrichtung zum Kühlen einer in einem Gefäß enthaltenen Nahrungsmittelmasse mittels einer von CO₂ verschiedenen Tiefsttemperaturflüssigkeit mit:
- einem Niederdruckspeicher für die Tiefsttemperaturflüssigkeit, deren Druck im Intervall von 1 bis 3 Bar liegt,
- zumindest einer Injektionsdüse, die in der Lage ist, die Flüssigkeit durch die Wand des Bodenteils des Gefäßes ins Innere der im Gefäß enthaltenen Materialmasse zu injizieren,
- einem Zwischenspeichervolumen für die Tiefsttemperaturflüssigkeit,
- einer ersten Übertragungsleitung, die in der Lage ist, die aus dem Niederdruckspeicher stammende Flüssigkeit in das Zwischenspeichervolumen zu leiten,
- Mittel zum Unterdruckbringen der in dem Zwischenspeichervolumen gespeicherten Flüssigkeit, die geeignet sind, diese Flüssigkeit bis auf einen Druck zu bringen, der einen Wert größer oder gleich 5 Bar und vorzugsweise in dem Intervall von 5 bis 15 Bar einnimmt,
- eine zweite Übertragungsleitung, die geeignet ist, so unter Druck gesetzte, von dem Zwischenspeichervolumen kommende Flüssigkeit zum Gefäß zu leiten, um die Injektionsdüse oder die Injektionsdüsen mit Tiefsttemperaturflüssigkeit zu versorgen.

13. Einrichtung nach Anspruch 12, **dadurch gekennzeichnet, dass** die Injektionsdüse oder die Injektionsdüsen über zumindest eine Verteilerleitung versorgt werden, die mit der zweiten Übertragungsleitung verbunden ist, wobei die oder jede Verteilerleitung in einer relativ zu der oder den Injektionsdüsen oberen Position angeordnet ist.

## Claims

1. Method of cooling a mass of food product contained in a chamber, by means of a cryogenic liquid other than CO₂, in which the cryogenic liquid is injected into the mass of material in the lower part of the chamber, **characterized in that** the pressure of the injected liquid is greater than or equal to 5 bar and preferably between 5 and 15 bar.

2. Method according to Claim 1, **characterized in that** the cryogenic liquid is injected into the apparatus by means of at least one injection nozzle of cylindrical shape, surrounded over all or part of its length by a concentric tube, defining an insulating annular space between the nozzle and the tube.

3. Method according to Claim 1 or 2, **characterized in that** the injection nozzle or nozzles are supplied with cryogenic liquid by at least one delivery rail located in a position above the nozzle or nozzles.

4. Method according to one of Claims 1 to 3, **characterized in that** the chamber is of the kneader, mixer or masticator type, having a single trough, and **in that** the cryogenic liquid is injected into the chamber through an injection nozzle or a series of injection nozzles present on each side of the trough.

5. Method according to one of Claims 1 to 3, **characterized in that** the chamber is of the kneader or mixer or masticator type having two troughs and **in that** the cryogenic liquid is injected into the chamber via an injection nozzle or a series of injection nozzles present on each side of the chamber.

6. Method according to one of Claims 1 to 5, **characterized in that** liquid nitrogen coming from a medium-pressure source is used as cryogenic liquid, the pressure lying within the range from 5 to 15 bar.

7. Method according to one of Claims 1 to 5, **characterized in that** liquid nitrogen coming from a low-pressure source is used as cryogenic liquid, the pressure lying within the range from 1 to 3 bar, and **in that** this liquid nitrogen is conveyed to the apparatus in the following manner:
- the cryogenic liquid coming from the low-pressure storage tank is directed into an intermediate buffer tank;
- the buffer tank is pressurized by means of gaseous nitrogen; and
- cryogenic liquid thus pressurized is extracted from the intermediate buffer tank in order to send it into the said injection nozzle or nozzles.

8. Method according to one of the preceding claims, **characterized in that** the cryogenic liquid is injected into the chamber in a sequenced manner.

9. Plant for cooling a mass of food product contained in a chamber by means of a cryogenic liquid other than CO₂, comprising:
- a medium-pressure storage tank for the cryogenic liquid, the pressure of which is greater than or equal to 5 bar and preferably lying within the range from 5 to 15 bar;
- at least one injection nozzle, capable of injecting the liquid into the mass of material contained in the chamber through the wall of the lower part of the chamber; and
- a transfer line capable of supplying the said at least one injection nozzle from the cryogenic liquid stored in the said medium-pressure storage tank.

10. Plant according to Claim 9, **characterized in that** the said transfer line supplies the injection nozzle or nozzles via at least one delivery rail placed in a position above the or each injection nozzle.

11. Plant according to Claim 9 or 10, **characterized in that** the or each injection nozzle is formed from a body of cylindrical shape surrounded over all or part of its length by a concentric tube, defining an insulating annular space between the nozzle and the tube.

12. Plant for cooling a mass of food product contained in a chamber by means of a cryogenic liquid other than CO₂, comprising:
- a low-pressure storage tank for the cryogenic liquid, the pressure of which lies within the range from 1 to 3 bar;
- at least one injection nozzle capable of injecting the liquid into the mass of material contained in the chamber through the wall of the bottom part of the chamber;
- a buffer tank for the intermediate storage of the cryogenic liquid;
- a first transfer line capable of sending the liquid coming from the said low-pressure storage tank into the intermediate buffer tank;
- means for pressurizing the liquid stored in the intermediate buffer tank, capable of pressurizing this liquid up to a pressure having a value greater than or equal to 5 bar, and preferably lying within the range from 5 to 15 bar; and
- a second transfer line capable of sending the liquid thus pressurized coming from the intermediate buffer tank into the said chamber, in order to supply the said injection nozzle or nozzles with cryogenic liquid.

13. Plant according to Claim 12, **characterized in that** the said injection nozzle or nozzles are supplied via at least one delivery rail connected to the said second transfer line, the or each delivery rail being placed in a position above the injection nozzle or nozzles.
